Europäisches Patentamt

European Patent Office

Office européen des brevets

(11) Veröffentlichungsnummer: **0 510 475 A1**

## EUROPÄISCHE PATENTANMELDUNG

(21) Anmeldenummer: **92106346.7**

(22) Anmeldetag: **13.04.92**

(51) Int. Cl.5: **C08L 81/02**, C08K 5/32, C08L 23/00

(30) Priorität: **26.04.91 DE 4113692**

(43) Veröffentlichungstag der Anmeldung:
**28.10.92 Patentblatt 92/44**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Köhler, Burkhard, Dr.**
**Mündelheimer Strasse 94**
**W-4150 Krefeld 11(DE)**
Erfinder: **Rüsseler, Wolfgang, Dr.**
**Buschstrasse 165**
**W-4150 Krefeld 1(DE)**
Erfinder: **Sarabi, Bahman, Dr.**
**Oelhausenweg 55A**
**W-4150 Krefeld(DE)**
Erfinder: **Reinking, Klaus, Dr.**
**Robert-Stolz-Strasse 16b**
**W-5632 Wermelskirchen(DE)**
Erfinder: **Jonas, Friedrich, Dr.**
**Krugenofen 15**
**W-5100 Aachen(DE)**

(54) **Mischungen aus PAS, Polyolefinen und Nitroverbindungen.**

(57) Die Erfindung betrifft Mischungen aus Polyarylensulfiden (PAS), vorzugsweise Polyphenylensulfid (PPS), Polyolefinen und Nitroverbindungen.

EP 0 510 475 A1

Die Erfindung betrifft Mischungen aus Polyarylensulfiden (PAS), vorzugsweise Polyphenylensulfid (PPS), Polyolefinen und Nitroverbindungen.

Polyarylensulfide sind bekannt (z.B. US-A-3 354 129, EP-A-171 021). Sie sind inerte, hochtemperaturbeständige Thermoplaste. Der Einsatz dieser Polymeren, insbesondere des Polyphenylensulfids (PPS) nimmt in Bereichen zu, die bisher Duroplasten vorbehalten waren.

PAS hat unbefriedigende mechanische Eigenschaften für einige Anwendungen im Spritzgußbereich. Insbesondere ist die Schlagzähigkeit für die Praxis nicht ausreichend. Es hat sich daher als Vorteil erwiesen, PAS z.B. durch Abmischung mit anderen Thermoplasten in den genannten Eigenschaften zu verbessern.

Aus der EP-A-158 989 sind Mischungen aus PPS und Ethylencopolymeren bekannt. Aus der EP-A-142 825 sind Mischungen aus PPS und Kautschuken bekannt. Solche Mischungen können eine verbesserte Zähigkeit oder eine verringerte Wasseraufnahme aufweisen.

Wünschenswert wären PAS-Mischungen, deren Schlagzähigkeit über die übliche Zähigkeit von PPS-Polyolefin-Mischungen hinausgehen.

Es wurde nun gefunden, daß eine Mischung aus PAS, vozugsweise PPS, Polyethylen und speziellen Nitroverbindungen eine höhere Zähigkeit aufweisen, als die oben genannten.

Gegenstand der Erfindung sind daher Mischungen aus

A) 50 bis 99.4 Gew.-% Polyarylensulfiden, vorzugsweise Polyphenylensulfid,

B) 0,5 bis 50 Gew.-%, vorzugsweise 1 bis 10 Gew.-%, Polyolefinen, vorzugsweise Polyethylen, Polypropylen, Polybutylen, Polyethylenpropylencopolymer, Polyethylenpropylendiencopolymere, Polystyrol, Polydien, Polybutadienstyrolcopolymere, hydrierte Polybutadienstyrolcopolymere, besonders bevorzugt Polyolefine ohne Diene als Comonomer,

C) 0,1 bis 5 Gew.-%, vorzugsweise 0,7 bis 2 Gew.-% Polynitroverbindungen oder Nitroarylaldehyde oder Nitroarylketone, die einen Siedepunkt von über 200°C aufweisen, und

D) bezogen auf die 100 Gew.-Teile der Mischung (A+B+C) 0 bis 300 Gewichtsteile übliche Füll-und Verstärkungsstoffe und/oder Ruß.

Beispiele für Polyolefine sind die in Houben-Weyl, Methoden der organischen Chemie, Band E 20/Teil 2, Georg Thieme Verlag Stuttgart, New York 1987, Seiten 689-842 und Seiten 859-1013 beschriebenen Polymeren.

Beispiele für Nitroverbindungen sind 3-Nitrobenzaldehyd, 4-Nitrobenzaldehyd, 2-Nitrobenzaldehyd, 3-Nitroacetophenon, m-Dinitrobenzol, 2,4 und 2,6-Dinitrotoluol, 3,5-Dinitrobenzoesäure, 3,5-Dinitrobenzoesäureester, wie z.B. der Ethyl-, Methyl-, Isopropyl- oder Phenylester, 3,5-Dinitrobenzoesäureamide, wie z.B. die Amide mit Anilin, Methylamin, Cyclohexylamin oder Piperidin, Harnstoffe aus 2 Molen 4-Nitroanilin mit einem Mol Bis-(4-isocyanatophenyl)methan oder 2,4- oder 2,6-Toluylendiisocyanat, 4,4'-Dinitrodiphenylether, 1,5- und 1,8-Dinitronaphthalin, 3,3'- und 4,4'-Dinitrodiphenylsulon, Dinitroanthrachinon, 3,3'-Dinitrobenzophenon, 4,4'-Bis(3-nitrobenzalamino)diphenylmethan, 1,6-Bis-(3-nitrobenzalamino)hexan, 4,4'-Bis(4-nitrobenzoylamino)diphenylmethan, 4,4'-Dinitrodiphenylsulfid, 3,3'-Dinitrodiphenylsulfon, 4,4'-Dinitrodiphenylsulfon, 2,2'-Dinitrodiphenyldisulfid, 4,4'-Dinitrodiphenyldisulfid, 1,5-Dinitronaphthalin, 1,8-Dinitronaphthalin.

Erfindungsgemäß werden handelsübliche, bevorzugt mit Polyurethanfilmbildnern oder Epoxidfilmbildnern und Amino- oder Epoxisilanhaftvermittlern geschlichtete Glasfasern eingesetzt. Sie haben einen Durchmesser von 1 bis 10 $\mu$m, vorzugsweise von 5 bis 13 $\mu$m. Es können Endlosglasfasern gewählt werden, bei denen die Länge der Fasern in der fertigen Abmischung 0,05 bis 10 mm, vorzugsweise 0,1 bis 2 mm, beträgt. Es können auch Endlosglasfasern (rovings) eingesetzt werden in Verfahren zur Herstellung von endlosverstärktem Unidirektionalverbund.

Gegebenenfalls können auch - insbesondere teilweise - anstelle der Glasfasern handelsübliche Glaskugeln eingesetzt werden, z.B. Ballotini-Glaskugeln.

Als weitere, mineralische Füllstoffe oder Zusatzstoffe seien Glimmer, Talkum, Quarzmehl, Metalloxide und Sulfide, z.B. $TiO_2$, ZnO, ZnS, Graphit, Ruß, Fasern, z.B. aus Quarz oder Kohlenstoff, Carbonate wie z.B. $MgCO_3$, $CaCO_3$ oder Sulfate wie z.B. $CaSO_4$, $BaSO_4$ genannt.

Die erfindungsgemäßen Mischungen zeichnen sich durch eine gute Zähigkeit aus. Sie eignen sich zur Herstellung geformter Körper.

Beispiele

Herstellung der Mischungen:

Das verwendete PPS wies eine Schmelzeviskosität von 45 bis 65 Pas (Schmelzetemp. = 310°C, Schergeschwindigkeit = $10^3$ 1/s) auf und wurde nach EP-A-171 021 hergestellt.

Als Glasfasern wurde die mit Epoxifilmbildner und Epoxisilanhaftvermittler geschlichtete Schnittglasfaser FT 562® der Fa. Asahi zu 40 Gew.-% eingesetzt.

Die Compoundierung (Herstellung) der Mischungen erfolgte auf einem Doppelextruder SZK 32 von Werner & Pfleiderer bei 340°C.

Die Viskosität der Mischung wurde bei einer Massetemperatur von 320°C und einer Schergeschwindigkeit von 1/1000 s durch Kapillarviskosimetrie bestimmt.

Es wurden Flachstäbe der Maße 80x10x4 mm$^3$ und bezüglich ihrer Schlagzähigkeit nach ISO 180 1C untersucht.

Vergleichsbeispiel 1

Es wurden 59,8 Gew.-% PPS und 0,2 Gew.-% E-Wachs (Montansäureester als Entformungsmittel) der Fa. Hoechst mit der Glasfasern gemischt. Die Schlagzähigkeit beträgt 50 kJ/m$^2$.

Vergleichsbeispiel 2

Es wurden 58,8 Gew.-% PPS, 1 Gew.-% Polyethylen PPV 1080-F® der Fa. Hoechst und 0,2 Gew.-% E-Wachs mit der Glasfaser gemischt. Die Schlagzähigkeit beträgt 47 kJ/m$^2$.

Beispiel 1

Es wurden 57,8 Gew.-% PPS, 1 Gew.-% Polyethylen, 1 Gew.-% 3,3'-Dinitrodiphenylsulfon und 0,2 Gew.-% E-Wachs mit der Glasfaser gemischt. Die Schlagzähigkeit beträgt 52 kJ/m$^2$.

Vergleichsbeispiel 3

Gemischt wurden 58,8 Gew.-% PPS, 0,5 Gew.-% Ruß, 0,5 Gew.-% m-Nitrobenzaldehyd und 0,2 Gew.-% E-Wachs. Die Schlagzähigkeit beträgt 39 kJ/m$^2$.

Beispiel 2

Gemischt wurden 57,8 Gew.-% PPS, 0,5 Gew.-% Ruß, 0,5 Gew.-% m-Nitrobenzaldehyd, 1 Gew.-% Polyethylen und 0,2 Gew.-% E-Wachs. Die Schlagzähigkeit beträgt 46 kJ/m$^2$.

**Patentansprüche**

1. Mischungen aus
   A) 50 bis 99,4 Gew.-% Polyarylensulfid,
   B) 0,5 bis 50 Gew.-% Polyolefinen,
   C) 0,1 bis 5 Gew.-% Polynitroverbindungen und/oder Nitroarylaldehyde oder Nitroarylketone, die einen Siedepunkt von über 200°C aufweisen, und
   D) bezogen auf 100 Gewichtsteile der Mischung (A + B + C) 0 bis 300 Gewichtsteile übliche Füll- und Verstärkungsstoffe und/oder Ruß.

2. Verwendung der Mischungen nach Anspruch 1 zur Herstellung geformter Körper.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 414 055 (BAYER AG)<br>* Seite 3, Zeile 39 – Zeile 40; Ansprüche 1,3-7; Beispiel 5 *<br>* Seite 3, Zeile 27 – Zeile 32 *<br>--- | 1,2 | C08L81/02<br>C08K5/32<br>C08L23/00 |
| A | EP-A-0 345 551 (BAYER AG)<br>* Seite 3, Zeile 5 – Zeile 7; Ansprüche 1-4; Beispiele *<br>--- | 1,2 | |
| A | US-A-4 708 983 (Y.F.LIANG)<br>* Spalte 4, Zeile 35 – Spalte 6, Zeile 23; Ansprüche 1-6; Tabelle 3 *<br>--- | 1,2 | |
| D,A | EP-A-0 158 989 (PHILLIPS PETROLEUM COMPANY)<br>* Ansprüche 1-10; Beispiele *<br>--- | 1,2 | |
| D,A | EP-A-0 142 825 (PHILLIPS PETROLEUM COMPANY)<br>* Ansprüche 1-12; Beispiele *<br>--- | 1,2 | |
| P,A | EP-A-0 451 539 (SUMITOMO CHEMICAL COMPANY)<br>* Seite 9, Zeile 43 – Zeile 52; Ansprüche; Beispiele 1-8 * | 1 | |

**RECHERCHIERTE SACHGEBIETE (Int. Cl.5 )**

C08L
C08K

-----

Der vorliegende Recherchenbericht wurde für alle Patentansprüche erstellt

| Recherchenort | Abschlußdatum der Recherche | Prüfer |
|---|---|---|
| DEN HAAG | 09 JULI 1992 | KLIER E.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................................
& : Mitglied der gleichen Patentfamilie, übereinstimmendes Dokument

EPO FORM 1503 03.82 (P0403)